(19) Europäisches Patentamt

European Patent Office

Office européen des brevets

(11) **EP 1 407 312 B1**

(12) **EUROPÄISCHE PATENTSCHRIFT**

(45) Veröffentlichungstag und Bekanntmachung des Hinweises auf die Patenterteilung:
**29.03.2006 Patentblatt 2006/13**

(51) Int Cl.:
***G02C 7/02*** *(2006.01)*

(21) Anmeldenummer: **02758093.5**

(22) Anmeldetag: **15.07.2002**

(86) Internationale Anmeldenummer:
**PCT/DE2002/002581**

(87) Internationale Veröffentlichungsnummer:
**WO 2003/007054 (23.01.2003 Gazette 2003/04)**

(54) **PROGRESSIVES BRILLENGLAS MIT ECHTER KURZER PROGRESSION**

PROGRESSIVE SPECTACLE LENS HAVING A GENUINE SHORT PROGRESSION AREA

VERRE PROGRESSIF DE LUNETTES A PROGRESSION COURTE NATURELLE

(84) Benannte Vertragsstaaten:
**DE ES FR GB IT**

(30) Priorität: **13.07.2001 DE 10133617**

(43) Veröffentlichungstag der Anmeldung:
**14.04.2004 Patentblatt 2004/16**

(73) Patentinhaber: **Rodenstock GmbH**
**80469 München (DE)**

(72) Erfinder:
- **WELK, Andrea**
  **81547 München (DE)**
- **WEHNER, Edda**
  **82275 Emmering (DE)**
- **ALTHEIMER, Helmut**
  **87650 Lauchdorf (DE)**
- **AWRATH, Norbert**
  **81539 München (DE)**
- **BAUMBACH, Peter**
  **81543 München (DE)**
- **ESSER, Gregor**
  **81735 München (DE)**
- **HAIMERL, Walter**
  **80337 München (DE)**
- **ZIMMERMANN, Martin**
  **85253 Kleinberghofen (DE)**
- **NIKOLAUS, Winfried**
  **85540 Haar (DE)**

(74) Vertreter: **Müller-Boré & Partner**
**Patentanwälte**
**Grafinger Strasse 2**
**81671 München (DE)**

(56) Entgegenhaltungen:
**EP-A- 0 911 672**          **US-A- 6 142 627**

- **S. MORGENSTERN: "Short Corridor Progressives: Lenses for the New Millenium" VISIONCAREPRODUCTS.COM, [Online] Januar 2001 (2001-01) - Februar 2001 (2001-02), XP002226548 Gefunden im Internet: <URL: http://www.visioncareproducts.com/02/ lenses.html> [gefunden am 2003-01-09]**

**Beschreibung**

**Technisches Gebiet**

Die Erfindung bezieht sich auf ein progressives Brillenglas mit echter kurzer Progression.

**Stand der Technik**

Aufgrund der kleiner gewordenen, modischen Fassungen werden dzt. viele Hersteller dazu veranlasst, progressive Brillengläser mit verkürzter Progressionslänge anzubieten.

Für die Länge der Progressionszone gibt es allerdings keine allgemeingültige Definition. Die Angabe des vertikalen Abstandes von Stempelpunkten, z.B. zwischen Fern- und Nahbezugspunkt oder zwischen Zentrierkreuz und Nahbezugspunkt, ist für die Charakterisierung der Progressionslänge eines Gleitsichtglases nicht ausreichend, da das Stempelbild nicht mit den Gebrauchseigenschaften korrelieren muss und auch bei vielen Gläsern nicht korreliert.

Von einem Glas mit kurzer Progression kann man erwarten, dass es im Zentrierpunkt oder im Fernbezugspunkt annähernd diejenige Wirkung hat, mit der die Fehlsichtigkeit korrigiert wird, und dass es die für die Nahsehaufgaben nötige Wirkung deutlich innerhalb des Fassungsrandes erreicht. Weder der Fernbereich noch der Nahbereich sollten von der Fassung durchschnitten werden; vielmehr sollten beide Bereiche innerhalb der Fassung liegen.

Von den Erfindern durchgeführte umfangreiche Trageversuche haben gezeigt dass Brillenträger es als angenehmer empfinden, wenn sie den Blick bei Nahsehaufgaben, also etwa beim Lesen eines Buches, nicht so stark senken müssen. Das geringere Anheben des Kopfes, z.B. bei Computerarbeit wird meist als ergonomisch angenehmer empfunden.

Dies gibt Anlass, die Progressionslänge wie folgt zu definieren:

Die Länge der Progressionszone ist die Differenz der vertikalen Koordinaten zweier Punkte, wobei der eine, der obere Punkt derjenige Punkt auf oder unmittelbar neben der Hauptblicklinie ist, auf dem annähernd die Wirkung vorhanden ist, mit der die Fehlsichtigkeit in der Ferne korrigiert wird (z.B. das Fernzentrierkreuz), und der andere, der untere Punkt derjenige Punkt auf oder unmittelbar neben der Hauptblicklinie ist, auf dem bei Blicksenkung das erste Mal die vom Rezept geforderte Nahwirkung erreicht wird.

Diese Definition liefert ein von willkürlichen Stempelbildern unabhängiges Maß für die Progressionslänge, die der Gebrauchssituation, in der der Brillenträger die Brille benutzt, Rechnung trägt.

Legt man diese Definition zugrunde, so zeigt ein Produktvergleich zwischen den auf dem Markt befindlichen Brillengläser, dass die Angaben der meisten Hersteller bezüglich der Progressionslänge ihrer Produkte von durchweg 12 - 14 mm einer realistischen Prüfung nicht standhalten. Die einzigen Produkte, die reale Progressionslängen von 12 mm bzw. 13 mm aufweisen, sind Kodak Concise und Shamir Piccolo. (Siehe URL: http://www. visioncareproducts.com/ 02/lenses.html).

Die Konstruktion eines Gleitsichtglases mit kurzer Progressionszone bringt einige Probleme mit sich. Eines der Hauptprobleme ist der seitliche Anstieg des Flächenastigmatismus rechts und links der Haupt(blick)-linie, der im wesentlichen durch den Satz von Minkwitz beschrieben wird. Je steiler der vertikale Anstieg des Brechwertes ist, desto größer ist der seitliche Anstieg des Flächenastigmatismus. Damit gilt tendenziell:

Je kürzer die Progressionszone bei gleicher erreichter Addition ist, desto schmäler ist sie auch.

Mit diesem größeren zentralen Astigmatismusgradienten geht auch ein erhöhter maximaler Astigmatismus in der Peripherie einher, der die optische Qualität in der Peripherie vermindert und auch einen Einfluss auf die optischen Eigenschaften im Bereich der Hauptlinie hat.

**Darstellung der Erfindung**

Aufgabe dieser Erfindung ist es, ein Brillenglas anzugeben, das im Sinne der vorstehenden Definition eine (echte) kurze Progressionszone aufweist und das trotz dieser Anforderung günstige Abbildungseigenschaften und ein verträgliches dynamisches Verhalten zeigt.

Die erfindungsgemäße Lösung dieser Aufgabe ist im Anspruch 1 gekennzeichnet. Weiterbildungen der Erfindung sind Gegenstand der abhängigen Ansprüche sowie der der Beschreibung entnehmbaren Merkmale.

Erfindungsgemäß wird der Fernbereich dadurch günstig gestaltet, dass die horizontale Änderung des Brechwertes in Gebrauchsstellung möglichst gering gehalten wird. Bei praktisch allen bekannten Gleitsichtgläsern nimmt im Fernbereich der Brechwert von der Hauptlinie an nach außen hin zu. Diese Zunahme ist tendenziell besonders bei konventionellen Produkten mit verkürzter Progression groß. Durch ein geeignetes Flächendesign kann man diese störende Zunahme deutlich reduzieren.

Bei Gleitsichtgläsern wird im Fernbezugspunkt beispielsweise die Wirkung in Scheitelmessstellung oder in Gebrauchsstellung erreicht. Im ersteren Falle hat das Glas dann in Gebrauchsstellung eine in der Regel nur geringfügig vom Rezept abweichende Wirkung. Bei horizontalen Blickauslenkungen erfährt der Brillenträger nach außen hin eine zu stark positive Wirkung, es kommt zu einer so genannten "Nebelung", die von Brillenträgern bemerkt und als störend empfunden wird.

Die Fernbereichsbreiten hängen von der Wirkung und von der Addition des Gleitsichtglases ab. Je größer die Addition ist, desto kleiner sind in der Regel die Fernbereichsbreiten.

Tabelle 1 zeigt die Fernbereichsbreiten eines erfindungsgemäßen Gleitsichtglases. Gleitsichtgläser (mit echter kurzer Progression) nach dem Stand der Technik weisen durchweg kleinere Fernteilbreiten auf. Das Koordinatensystem ist so gewählt, dass in Gebrauchsstellung die y-Achse vertikal und die x-Achse horizontal verlaufen.

**Tabelle 1:** Fernteilbreiten bei y = 7 mm in Abhängigkeit von Wirkung und Addition

|  | Sph = | -6.0 dpt | -2.5 dpt | 0.5 dpt | 3.0 dpt | 5.0 dpt |
|---|---|---|---|---|---|---|
| Addition = 1.0 |  | 47 mm | 55 mm | 60 mm | 60 mm | 60 mm |
| Addition = 2.0 |  | 34 mm | 36 mm | 34 mm | 29 mm | 35 mm |
| Addition = 3.0 |  | 26 mm | 27 mm | 25 mm | 22 mm | 23 mm |

Die Addition und die sphärische Wirkung im Fernteil (Sph) sind dabei in Dioptrin (dpt) angegeben.

In einem Horizontalschnitt mit der Koordinate y = const = 7 mm, der 3 mm über dem Zentrierkreuz und 1 mm unter dem Fernbezugspunkt liegt, weicht ein Gleitsichtglas gemäß der vorliegenden Erfindung erst sehr weit außen, d.h. bei betragsmäßig großen horizontalen Koordinaten, wesentlich von dem Rezeptwert für die Ferne ab.

Als Fernteilbreite in einem gegebenen Horizontalschnitt wird der Abstand der beiden Punkte rechts und links der Hauptlinie definiert, in denen der mittlere Brechwert den Wert des sphärischen Äquivalents (sph + ½ cyl)des Rezeptes um 0.5 dpt übersteigt.

Durch ein geeignetes Flächendesign kann man erfindungsgemäß auch die dynamische Verzeichnung deutlich reduzieren.

Die Vergrößerung (in Prozent) ist definiert als Quotient der Netzhautbildgröße mit Brillenglas zur Netzhautbildgröße ohne Brillenglas. Daraus lässt sich unmittelbar folgende, allgemein bekannte Formel ableiten:

$$\Gamma = \frac{\tan w'}{\tan w}$$

wobei w' der Sehwinkel mit Brillenglas und w der Sehwinkel ohne Brillenglas ist.

Bei betragsmäßig kleinen Wirkungen hat die Vergrößerung in Horizontalschnitten im Nahbereich einen charakteristischen, W-förmigen Verlauf. Auf oder nahe der Hauptlinie hat die Vergrößerung ein lokales Maximum. Von diesem Maximum nimmt sie nach außen hin zunächst ab, durchläuft ein Minimum und nimmt danach wieder zu. Das Glas muss sich dabei nicht symmetrisch zur Hauptlinie verhalten, insbesondere kann das temporale Minimum einen niedrigeren Wert als das nasale Minimum haben.

Ein Gleitsichtglas nach der Erfindung zeichnet sich dadurch aus, dass sich die Vergrößerung in einem Horizontalschnitt nur wenig ändert.

Als weiteres Merkmal dient erfindungsgemäß der maximale Hub der Vergrößerung, d.h. die Differenz der Vergrößerung im Maximum (an oder nahe der Hauptlinie) und im niedrigeren der beiden Minima. Dies ist in Tabelle 2 dargestellt:

**Tabelle 2:** Maximaler Hub der Vergrößerung bei y = -12 mm in Abhängigkeit von Wirkung und Addition bei einem erfindungsgemäßen Gleitsichtglas

|  | Sph = -0.5 dpt | 0.5 dpt | 1.5 dpt |
|---|---|---|---|
| Addition = 1.0 | 1.4% | 0.9% | 0.5% |
| Addition = 2.0 | 2.6% | 2.5% | 2.2% |
| Addition = 3.0 | 4.4% | 4.2% | 4.1% |

## Kurze Beschreibung der Zeichnung

Die Erfindung wird nachstehend ohne Beschränkung des allgemeinen Erfindungsgedankens anhand von Ausführungsbeispielen unter Bezugnahme auf die Zeichnung exemplarisch beschrieben, auf die im übrigen hinsichtlich der Offenbarung aller im Text nicht näher erläuterten erfindungsgemäßen Einzelheiten ausdrücklich verwiesen wird. Es zeigen:

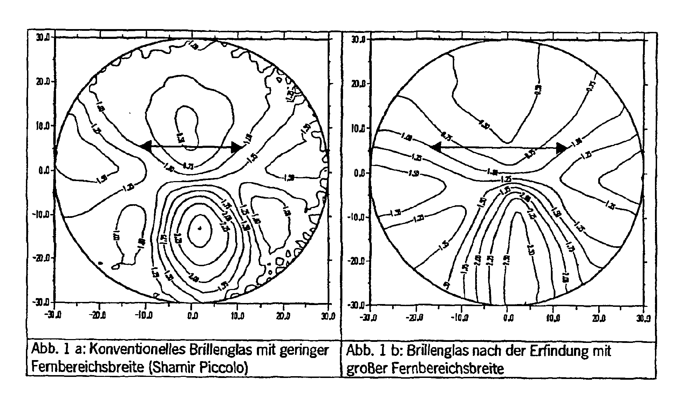

Abb.1 a    ein konventionelles Brillenglas mit geringer Fernbereichsbreite (Shamir Piccolo)
Abb. 1 b   ein Brillenglas nach der Erfindung mit großer Fernbereichsbreite

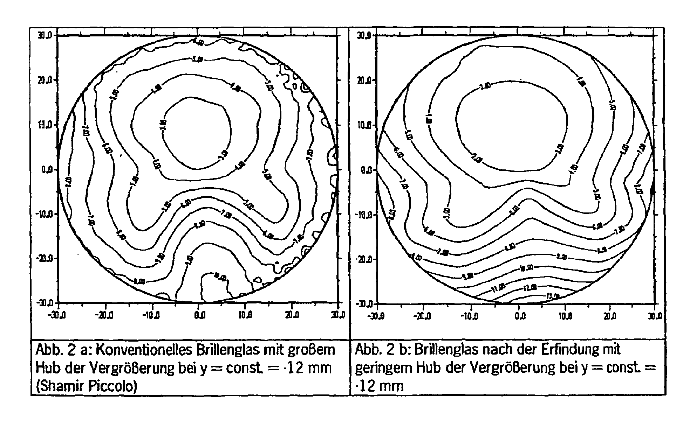

Abb. 2a    ein konventioneles Brillenglas mit großem Hub der Vergrößerung bei y = const = -12 mm (Shamir Piccolo)
Abb. 2b    ein Brillenglas nach der Erfindung mit geringem Hub der Vergrößerung bei y = const = -12 mm

**Darstellung von Ausführungsbeispielen**

Je größer die Fernbereichsbreiten sind, desto besser ist das Gleitsichtglas. Für die meisten Brillenträger ist das Sehen in die Ferne die häufigste Sehaufgabe. Hier wird eine Einschränkung des Gesichtsfeldes als ganz besonders störend empfunden. Eine eingeschränkte visuelle Wahrnehmung im Fernbereich würde zum Beispiel im Straßenverkehr ein erhöhtes Sicherheitsrisiko darstellen, weil dort das periphere Sehen eine große Bedeutung hat. Eine größere Fernbereichsbreite ermöglicht das Blicken in den Rückspiegel ohne Kopfdrehung und reduziert somit die Zeit, in der der Fahrer nicht nach vorne beobachten kann.

Die Änderung der Vergrößerung hat einen Einfluss auf die Stärke der dynamischen Verzeichnung. Bei horizontalen Kopfdrehungen zeigen Trageversuche einen insgesamt ruhigeren Raumeindruck. Dieser wirkt sich vorteilhaft auch bei Sehaufgaben im Zusammenhang mit kombinierten Kopf- und Körperbewegungen im Raum (z.B. Treppensteigen) aus.

Die mit dem erfindungsgemäßen Brillenglas erzielten Vorteile sind ohne Beschränkung des allgemeinen Erfindungsgedankens in den Figuren dargestellt.

**Patentansprüche**

1.  Progressives Brillenglas mit

    - einem zum Blicken in größere Entfernungen und insbesondere "ins Unendliche" ausgelegten Bereich (Fernteil),
    - einem zum Blicken in kürzere Entfernungen und insbesondere "Lese-Entfernungen" ausgelegten Bereich (Nahteil), und
    - einer zwischen Fernteil, und Nahteil angeordneten Progressionszone, in der die Wirkung des Brillenglases von dem Wert in dem im Fernteil gelegenen Fernbezugspunkt auf den Wert des im Nahteil gelegenen Nahbezugspunktes längs einer zur Nase hin gewundenen Kurve (Hauptlinie) zunimmt,

    **dadurch gekennzeichnet, dass** die Progressionslänge kleiner oder gleich 12 mm ist wobei die Progressions Länge wie folgt definiert ist:

    "die Länge der Progressionszone ist die Differenz der vertikalen Koordinaten zweier Punkte, wobei der eine, der obere Punkt derjenige Punkt auf oder unmittelbar neben der Hauptblicklinie ist, auf dem annähernd die Wirkung vorhanden ist, mit der die Fehlsichtigkeit in der Ferne korrigiert wird (z.B. das Fernzentrierkreuz), und der andere, der untere Punkt derjenige Punkt auf oder unmittelbar neben der Hauptblicklinie ist, auf dem bei Blicksenkung das erste Mal die vom Rezept geforderte Nahwirkung erreicht wird",

    und
    dass die Fernteilbreite im Horizontalschnitt y = +7 mm in Abhängigkeit von Wirkung und Addition größer als die in der nachfolgenden Tabelle angegebenen Werte ist:

|                | Sph = -6.0 dpt | -2.5 dpt | 0.5 dpt | 3.0 dpt | 5.0 dpt |
|----------------|----------------|----------|---------|---------|---------|
| Addition = 1.0 | 47 mm          | 55 mm    | 60 mm   | 60 mm   | 60 mm   |
| Addition = 2.0 | 34 mm          | 36 mm    | 34 mm   | 29 mm   | 35 mm   |
| Addition = 3.0 | 26 mm          | 27 mm    | 25 mm   | 22 mm   | 23 mm   |

    wobei die Addition und die sphärishe Wirkung im Fernteil (Sph) in Dioptrin (dpt) angegeben sind.

2. Brillenglas nach Anspruch 1,
**dadurch gekennzeichnet, dass** der maximale Hub der Vergrößerung im Horizontalschnitt y = -12 mm in Abhängigkeit von Wirkung und Addition kleiner als die in der nachfolgenden Tabelle angegebenen Werte ist:

|                | Sph = -0.5 dpt | 0.5 dpt | 1.5 dpt |
| -------------- | -------------- | ------- | ------- |
| Addition = 1.0 | 1.4%           | 0.9%    | 0.5%    |
| Addition = 2.0 | 2.6%           | 2.5%    | 2.2%    |
| Addition = 3.0 | 4.4%           | 4.2%    | 4.1%    |

3. Progressives Brillenglas nach Anspruch 1 oder 2,
**dadurch gekennzeichnet, dass** mit Wirkungen und Additionen zwischen den tabellierten Werten entsprechend linear interpolierte Werte gelten.

## Claims

1. Progressive spectacle lens having

   - a zone designed for looking at longer distances and in particular "into infinity" (distance zone),
   - a zone designed for looking at shorter distances and in particular "reading distances" (near zone), and
   - a progression zone disposed between the distance zone and near zone in which the effect of the spectacle lens increases from the value in the distance reference point situated in the distance zone to the value of the near reference point situated in the near zone along a curve meandering towards the nose (main line),

   **characterised in that** the progression length is smaller than or equal to 12 mm, the progression length being defined as follows:

   "the length of the progression zone is the difference of the vertical coordinates of two points, the one point, the upper point, being that on or directly next to the main line of vision where the effect is approximately present with which the defective distance vision is corrected (e.g. the distance centring cross), and the other point, the lower point, being that on or directly next to the main line of vision where, when looking down, the near effect required by the prescription is achieved for the first time", and

   **in that** the distance zone width in the horizontal section y = + 7 mm, as a function of effect and addition, is greater than the values indicated in the subsequent Table:

   |                | sph = - 0.6 dpt | - 2.5 dpt | 0.5 dpt | 3.0 dpt | 5.0 dpt |
   | -------------- | --------------- | --------- | ------- | ------- | ------- |
   | Addition = 1.0 | 47 mm           | 55 mm     | 60 mm   | 60 mm   | 60 mm   |
   | Addition = 2.0 | 34 mm           | 36 mm     | 34 mm   | 29 mm   | 35 mm   |
   | Addition = 3.0 | 26 mm           | 27 mm     | 25 mm   | 22 mm   | 23 mm   |

   the addition and the spherical effect in the distance zone (sph) being indicated in dioptres (dpt).

2. Spectacle lens according to claim 1,
**characterised in that** the maximum change in the increase in the horizontal section y = - 12 mm, as a function of effect and addition, is smaller than the values indicated in the subsequent Table:

|                | sph = - 0.5 dpt | 0.5 dpt | 1.5 dpt |
| -------------- | --------------- | ------- | ------- |
| Addition = 1.0 | 1.4%            | 0.9%    | 0.5%    |
| Addition = 2.0 | 2.6%            | 2.5%    | 2.2%    |
| Addition = 3.0 | 4.4%            | 4.2%    | 4.1%    |

3. Progressive spectacle lens according to claim 1 or 2,
**characterised in that** correspondingly linearly interpolated values apply with effects and additions between the tabulated values.

**Revendications**

1. Verre de lunettes progressif avec

   - une zone dimensionnée pour regarder sur de longues distances et, en particulier, « à l'infini » (pièce divergente),
   - une zone dimensionnée pour regarder sur de courtes distances et, en particulier, sur des « distances de lecture » (pièce convergente) et
   - une zone de progression placée entre la pièce divergente et la pièce convergente et dans laquelle l'effet du verre de lunettes s'accroît en suivant une courbe en arrondi (ligne principale) partant du nez, et passe de la valeur du point de référence distant de la pièce divergente à la valeur du point de référence proche de la pièce convergente,

   **caractérisé en ce que** la longueur de progression est inférieure ou égale à 12 mm, sachant que la longueur de progression est définie de la manière suivante : la longueur de la zone de progression correspond à la différence des coordonnées verticales de deux points, dont l'un, le point supérieur, est le point placé sur ou juste à côté de la ligne de regard principale et sur lequel on observe l'effet permettant de corriger la mauvaise vision à distance (par exemple le point de focalisation à distance) et dont l'autre, le point inférieur, est le point placé sur ou juste à côté de la ligne de regard principale et sur lequel, si l'on baisse les yeux, on obtient pour la première fois la convergence exigée par la formule et **en ce que** la largeur de la pièce divergente sur une coupe horizontale y = + 7 mm, en fonction de l'effet et de l'addition, est supérieure à la largeur indiquée dans le tableau ci-dessous :

   |  | Sph= -6.0 dpt | -2.5 dpt | 0.5 dpt | 3.0 dpt | 5.0 dpt |
   |---|---|---|---|---|---|
   | Addition = 1.0 | 47 mm | 55 mm | 60 mm | 60 mm | 60 mm |
   | Addition = 2.0 | 34 mm | 36 mm | 34 mm | 29 mm | 35 mm |
   | Addition = 3.0 | 26 mm | 27 mm | 25 mm | 22 mm | 23 mm |

   sachant que l'addition ainsi que l'effet sphérique de la pièce divergente (Sph) sont exprimés en dioptries (dpt).

2. Verre de lunettes selon la revendication 1, **caractérisé en ce que** l'augmentation maximale du grossissement sur une coupe horizontale y = - 12 mm, en fonction de l'effet et de l'addition, est inférieure aux valeurs indiquées dans-le tableau ci-dessous :

   |  | Sph = -0.5 dpt | 0.5 dpt | 1.5 dpt |
   |---|---|---|---|
   | Addition =. 1.0 | 1.4% | 0.9% | 0.5% |
   | Addition = 2.0 | 2.6% | 2.5% | 2.2% |
   | Addition= 3.0 | 4.4% | 4.2% | 4.1% |

3. Verre de lunettes progressif selon la revendication 1 ou 2, **caractérisé en ce que**, suite aux effets et aux additions constatés entre les valeurs figurant dans le tableau, les valeurs d'interpolation linéaire s'appliquent en conséquence.

Abb. 1 a: Konventionelles Brillenglas mit geringer Fernbereichsbreite (Shamir Piccolo)

Abb. 1 b: Brillenglas nach der Erfindung mit großer Fernbereichsbreite

| Abb. 2 a: Konventionelles Brillenglas mit großem Hub der Vergrößerung bei y = const. = -12 mm (Shamir Piccolo) | Abb. 2 b: Brillenglas nach der Erfindung mit geringem Hub der Vergrößerung bei y = const. = -12 mm |
|---|---|